# EUROPÄISCHE PATENTSCHRIFT

(11) **EP 3 289 854 B1**
(45) Veröffentlichungstag und Bekanntmachung des Hinweises auf die Patenterteilung: **04.09.2019**
(21) Anmeldenummer: 17164472.7
(22) Anmeldetag: 03.04.2017
(51) Int. Cl.: A01F 12/10, A01D 61/00

(54) **ANTRIEBSRAD FÜR EINEN SCHRÄGFÖRDERER, SCHRÄGFÖRDERER UND ANORDNUNG AUS EINER SELBSTFAHRENDEN ERNTEMASCHINE UND DEM SCHRÄGFÖRDERER**
DRIVE WHEEL FOR AN INCLINED CONVEYOR, INCLINED CONVEYOR AND ASSEMBLY COMPRISING A SELF-PROPELLED HARVESTING MACHINE AND THE INCLINED CONVEYOR
ROUE D'ENTRAÎNEMENT POUR UN CONVOYEUR OBLIQUE, CONVOYEUR OBLIQUE ET AGENCEMENT CONSTITUÉ D'UNE MOISSONNEUSE AUTOMOTRICE ET D'UN CONVOYEUR OBLIQUE

(30) Priorität: 05.09.2016 DE 102016116548
(43) Veröffentlichungstag der Anmeldung: 07.03.2018
(73) Patentinhaber: CLAAS Selbstfahrende Erntemaschinen GmbH, 33428 Harsewinkel (DE)
(72) Erfinder: Burbank, Martin, 48231 Warendorf (DE); Kortenjann, Ludger, 48231 Warendorf (DE)
(74) Vertreter: CLAAS Gruppe

(56) Entgegenhaltungen:
- EP-A1- 2 965 612
- DE-B4-102009 036 104
- DE-U- 1 831 012
- US-A- 3 948 110
- US-B1- 7 021 457

## Beschreibung

Die vorliegende Erfindung betrifft eine Antriebsrolle für einen Schrägförderer zum Fördern von Erntegut in eine selbstfahrende Erntemaschine, wobei die Antriebsrolle mittels einer sich konzentrisch um eine Antriebsachse erstreckenden Nabe drehfest an einer Antriebswelle befestigbar ist, wobei die Antriebsrolle Mitnehmer aufweist, die an der Nabe gleichmäßig verteilt angeordnet sind, die sich von der Nabe ausgehend zu einem offenen Ende hin erstrecken, und zum form- und/oder kraftschlüssigen Transport eines Förderbandes vorgesehen sind. Die vorliegende Erfindung betrifft weiterhin einen Schrägförderer mit einer solchen Antriebsrolle sowie eine Anordnung aus einer selbstfahrenden Erntemaschine und einem solchen Schrägförderer.

Das mit einem Vorsatzgerät geerntete Erntegut wird mittels eines Schrägförderers in eine selbstfahrende Erntemaschine, beispielsweise einen Mähdrescher, gefördert, und dann dort verarbeitet. Zumeist werden bislang dafür als Kettenförderer ausgebildete Schrägförderer verwendet. Solche Schrägförderer weisen zumindest zwei parallel zueinander angeordnete Förderketten auf, zwischen denen Förderleisten zum Fördern des Erntegutes angeordnet sind. Bekannt ist aber auch die Verwendung von Förderbändern anstelle der Förderketten, beispielsweise aus einem gewebelagenverstärkten, vernetzten Polymer.

Die Druckschrift DE 18 31 012 U beschreibt ein Antriebsrad und zugeordneten Siebbandgurt an Hackfrucht- Erntemaschinen, wobei das Siebband aus parallel zueinander liegenden, durch Siebbandstäbe miteinander verbundenen Siebbandgurten besteht, und wobei die Antriebsräder mit Nuten versehen sind, in die auf der Lauffläche der Siebbandgurte vorgesehene Erhöhungen eingreifen.

Einen Schrägförderer mit Förderband zeigt beispielsweise die Druckschrift DE 10 2009 036 104 B4. Jedes der Förderbänder weist an seiner Innenseite, die als Lauffläche dient, eine Verzahnung auf, die mit Mitnehmern der Antriebsräder des Schrägförderers form- und/oder kraftschlüssig zusammenwirkt. Die Mitnehmer greifen dabei in Spalte zwischen den Zähnen des Förderbandes ein. Dabei wird das Erntegut zumeist unterschächtig gefördert, das heißt entlang einer Bodenwand des Schrägförderers.

Je nach Erntegut und Bodenbeschaffenheit und mit steigender Feuchtigkeit besteht dabei die Gefahr, dass sich die Fördermittel, insbesondere die Antriebsmittel, des Schrägförderers mit Erntegutbestandteilen und/oder Bodenbestandteilen zusetzen.

Aufgabe der vorliegenden Erfindung ist es, einen Schrägförderer für eine selbstfahrende Erntemaschine zu schaffen, bei dem die Gefahr, dass sich seine Antriebsmittel mit Erntegutbestandteilen und/oder Bodenbestandteilen zusetzen, gering ist, und der daher ein störungsfreies Fördern des Erntegutes in die Erntemaschine bei hohem Gutdurchsatz gewährleistet.

Die Aufgabe wird gelöst mit einer Antriebsrolle für ein Förderband eines Schrägförderers mit den Merkmalen des unabhängigen Patentanspruchs 1, einem Schrägförderer mit den Merkmalen des Patentanspruchs 9 sowie einer Anordnung mit den Merkmalen des Patentanspruchs 12. Vorteilhafte Ausführungsformen sind den abhängigen Ansprüchen entnehmbar.

Dafür wird eine Antriebsrolle für einen Schrägförderer zum Fördern von Erntegut in eine selbstfahrende Erntemaschine geschaffen. Die Antriebsrolle ist mittels einer sich konzentrisch um eine Antriebsachse erstreckenden Nabe drehfest an einer Antriebswelle des Schrägförderers befestigbar.

An der Nabe sind die Mitnehmer gleichmäßig verteilt angeordnet. Die Mitnehmer erstrecken sich von der Nabe ausgehend zu einem offenen Ende hin. Sie sind zum form- und/oder kraftschlüssigen Transport eines Förderbandes vorgesehen.

Besonders vorteilhaft ist, dass eine den Mitnehmern zugewandte Außenfläche der Nabe zumindest teilweise rampenförmig ausgebildet ist, so dass sich die Nabe in oder gegen eine axiale Richtung der Achse zum offenen Ende hin verjüngt. In der Richtung zum offenen Ende der Mitnehmer hin vergrößert sich daher ein Abstand der Mitnehmer zur Außenfläche. Dadurch weitet sich ein Freiraum zwischen den Mitnehmern und der Außenfläche in Richtung zum offenen Ende der Mitnehmer hin auf. Der rampenförmig ausgebildete Teil der Außenfläche dient als ein Führungsmittel zum Abtransport von Erntegut- und/oder Bodenbestandteilen. Erntegut- und/oder Bodenbestandteile, die zwischen die Mitnehmer und das Förderband geraten, werden im Betrieb des Schrägförderers, insbesondere durch nachrückende Erntegut- und/oder Bodenbestandteile, entlang dem rampenförmig ausgebildete Teil der Außenfläche in Richtung zum offenen Ende hin gedrückt. Die Erntegut-und/oder Bodenbestandteile können sich daher im Betrieb des Schrägförderers weniger stark oder sogar gar nicht zwischen den Mitnehmern festsetzen, und den form- und/oder kraftschlüssigen Transport des Förderbandes so nicht behindern. Der rampenförmig ausgebildete Teil der Außenfläche bewirkt somit eine selbstreinigende Wirkung der Antriebsrolle. Im Folgenden wird der rampenförmig ausgebildete Teil der Außenfläche auch als Rampe bezeichnet.

Die Antriebsrolle zeichnet sich dadurch aus, dass sich die Mitnehmer jeweils an einer der Nabe zugewandten Unterseite in Richtung zum offenen Ende hin verjüngen. Dadurch ist der Freiraum am offenen Ende groß, so dass Erntegut- und Bodenbestandteile leicht dorthin nachrücken können. Zudem wird durch diese Ausbildung der Mitnehmer Herstellungsmaterial für die Mitnehmer, und daher Gewicht der Antriebsrolle, eingespart.

Zwischen der Außenfläche, insbesondere der Rampe, und jedem der Mitnehmer ist bevorzugt ein sich in einer radialen Richtung zur Antriebsachse erstreckender Stützsteg angeordnet. Der Stützsteg stützt Kräfte ab, die in radialer und/oder tangentialer Richtung jeweils auf ihren Mitnehmer wirken. Er erhöht daher die Stabilität des Mitnehmers und der Antriebsrolle. Um ein Festsetzen von Erntegut am Stützsteg zu vermeiden, ist es weiterhin bevorzugt, dass sich dieser in axialer Richtung flächig erstreckt. Dadurch bildet er eine sich, vorzugsweise eben, zwischen der Außenfläche und dem Mitnehmer erstreckende Zwischenwand, die die Außenfläche, insbesondere die Rampe, in Abschnitte teilt. Erntegut-und/oder Bodenbestandteile können sich dadurch nicht am Stützsteg verfangen und festsetzen.

An seiner dem offenen Ende der Mitnehmer zugewandten Seite weist der Stützsteg bevorzugt eine Bogenform auf. Dadurch sind die Mitnehmer am offenen Ende, insbesondere in und gegen die radiale Richtung, zumindest geringfügig nachgiebig. Diese Ausbildung erleichtert zudem ein Ausräumen des Freiraums von Erntegut- und/oder

Bodenbestandteilen, insbesondere mit Hilfe eines in den Freiraum hineinragenden Ausräumzahns.

Die Antriebsrolle weist bevorzugt eine sich quer zur Antriebsachse erstreckende Seitenwand auf. Die Seitenwand ist bevorzugt an der Nabe festgelegt. Sie kann aber auch einstückig mit dieser gefertigt sein.

Das Förderband wird entlang der Seitenwand geführt. Die Seitenwand dient so als Anschlag für das Förderband, der ein Verschieben des Förderbandes in oder gegen die axiale Richtung begrenzt.

Die Mitnehmer erstrecken sich bevorzugt im Wesentlichen parallel der Antriebsachse.

An einer der Außenfläche abgewandten Oberseite weisen die Mitnehmer jeweils außerdem eine zu ihrer Mitte hin ansteigende Kontur auf. Durch die Kontur ist das an den Mitnehmern angeordnete Förderband geringfügig verspannt. Das Förderband wird von den Mitnehmern so besser gehalten.

Die Oberseite weist in einem Querschnitt quer zur axialen Richtung weiterhin bevorzugt eine bogenförmige oder halbkreisförmige Kontur auf. Am Förderband angeordnete Anformungen, die form- und/oder kraftschlüssig zwischen die Mitnehmer greifen, um den form- und/oder kraftschlüssigen Antrieb des Förderbandes zu ermöglichen, können so leicht zwischen die Mitnehmer gleiten.

Die Aufgabe wird weiterhin gelöst mit einem Schrägförderer für eine Erntemaschine, insbesondere für einen Mähdrescher. Der Schrägförderer ist zum Fördern von Erntegut in die Erntemaschine, insbesondere in ein Dreschwerk der Erntemaschine, vorgesehen. Er ist an der Erntemaschine lösbar anordbar. Zum Fördern des Erntegutes umfasst er mindestens ein endloses Förderband, das eine erfindungsgemäße Antriebsrolle sowie eine Umlenkrolle umschlingt. Die Antriebsrolle und die Umlenkrolle sind bevorzugt in einem Gehäuse des Schrägförderers, insbesondere zwischen zwei einander gegenüberliegenden Gehäuseseitenwänden, drehbar gelagert.

Durch die zumindest teilweise rampenförmige Ausbildung der Außenfläche der Antriebsrollen werden Erntegut- und Bodenbestandteile, die zwischen die Mitnehmer geraten, insbesondere durch nachrückendes Erntegut, entlang der Außenfläche, insbesondere von der Seitenwand weg, geführt und können sich so nicht dauerhaft in der Antriebsrolle festsetzten.

In einer bevorzugten Ausführungsform weist der Schrägförderer zwei Förderbänder und zwei solche Antriebsrollen und Umlenkrollen auf, wobei jeweils ein Förderband eine der Antriebsrollen und Umlenkrollen umschlingt. Es können aber auch mehr Förderbänder und entsprechend mehr Antriebsrollen und Umlenkrollen vorgesehen sein. Die Förderbänder sind bevorzugt in einem durch die Gehäuseseitenwände begrenzten Innenraum voneinander beabstandet und jeweils einer der Gehäuseseitenwände benachbart angeordnet. Zum Transport des Erntegutes sind sie bevorzugt durch Förderleisten, die an den Förderbändern befestigt sind, und die sich quer zur Förderrichtung des Schrägförderers erstrecken, mechanisch miteinander verbunden.

Die Förderbänder weisen bevorzugt eine Breite auf, die etwa einer Länge der Mitnehmer entspricht, oder nur unwesentlich größer oder kleiner als die Länge der Mitnehmer ist. Bei dieser Ausführungsform können die in die Antriebsrolle geratenen Erntegut- und/oder Bodenbestandteile am offenen Ende aus ihr heraus in den Innenraum und zurück in den Erntegutstrom gelangen.

Um ein Ausräumen des Freiraums zwischen den Mitnehmern und der Außenfläche weiter zu verbessern, ist es zudem bevorzugt, dass der Schrägförderer, insbesondere für jede Antriebsrolle jeweils, einen Ausräumzahn aufweist, der an ihm, insbesondere an einem Gehäusebauteil des Schrägförderers, ortsfest befestigt ist. Vorzugsweise ragt der Ausräumzahn in den Freiraum zwischen den Mitnehmern und der Außenfläche hinein.

Der Ausräumzahn weist bevorzugt ein spitz zulaufendes Ausräumende auf, mit dem er in den Freiraum hineinragt.

Zudem ist es bevorzugt, dass das Ausräumende zu einer Förderrichtung des Erntegutes in einem stumpfen Ausräumwinkel angeordnet ist. Dadurch können sich die aus dem Freiraum mit dem Ausräumzahn ausgeräumten Erntegut- und Bodenbestandteile weniger leicht oder gar nicht an ihm verfangen.

Das Gehäusebauteil ist bevorzugt eine Innenabdeckung zum Schutz der Antriebswelle. Vorzugsweise umgreift sie diese zumindest teilweise.

Die Aufgabe wird weiterhin gelöst mit einer Anordnung aus einer selbstfahrenden Erntemaschine und einem solchen, an dieser angeordneten Schrägförderer. Der Schrägförderer ist bevorzugt höhenverstellbar und lösbar an der Erntemaschine angebracht. Besonders bevorzugt ist am Schrägförderer ein Vorsatzgerät angeordnet, dass zum Ernten des Erntegutes vorgesehen ist. Mit dem zwischen dem Vorsatzgerät und der Erntemaschine angeordneten Schrägförderer ist das Erntegut in die Erntemaschine förderbar.

Je nach Ernteguteigenschaften oder Bodenbeschaffenheit können vom Vorsatzgerät aufgenommene Erntegut- und Bodenbestandteile, insbesondere Maisspindel, Halme, feuchte Erdklumpen oder Lehm, an der Seitenwand der Antriebsrolle zwischen die Mitnehmer gelangen. Durch die zumindest teilweise rampenförmig ausgebildete Außenfläche wird das Herausfördern solcher Erntegut- und Bodenbestandteile aus der Antriebrolle unterstützt und eine selbstreinigende Wirkung erzielt.

Die vorliegende Erfindung wird nachstehend anhand von Figuren näher beschrieben. Die Figuren sind lediglich beispielhaft und schränken den allgemeinen Erfindungsgedanken nicht
- Fig. 1: schematisch einen Ausschnitt aus einer selbstfahrenden Erntemaschine in einer Seitenansicht;
- Fig. 2: in (a) einen Ausschnitt aus einem Schrägförderer mit einer erfindungsgemäßen Antriebsrolle und in (b) ein Schnittbild aus (a);
- Fig. 3: einen Ausschnitt aus einer weiteren Ausführungsform eines Schrägförderers mit einer erfindungsgemäßen Antriebsrolle; und
- Fig. 4: eine weitere Ausführungsform eines Schrägförderers mit zwei erfindungsgemäßen Antriebsrollen.

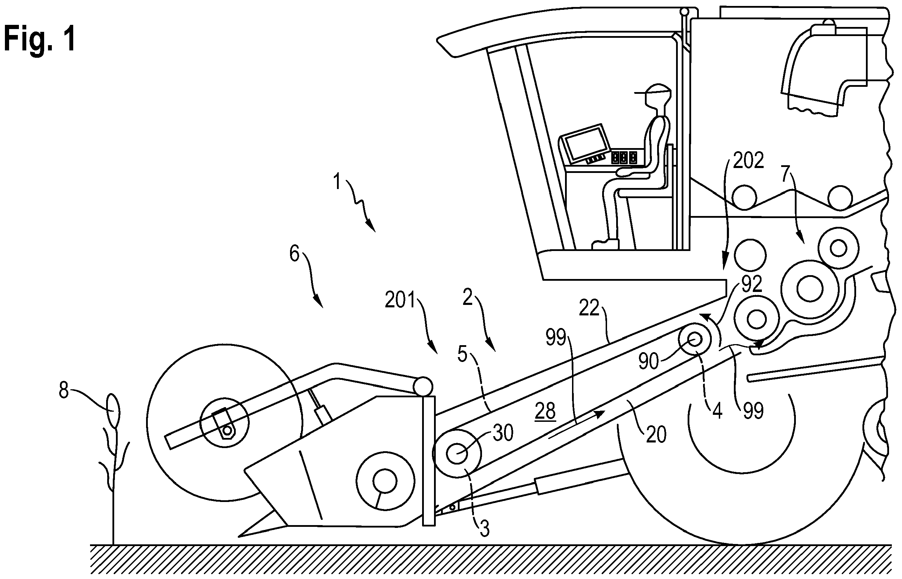

Fig.1 zeigt schematisch einen Ausschnitt aus einer Anordnung mit einem Schrägförderer 2 und einer selbstfahrenden Erntemaschine 1, hier einem Mähdrescher. Im Folgenden werden die Begriffe Erntemaschine 1 und Mähdrescher synonym verwendet.

Der Schrägförderer 2 ist lösbar an der Erntemaschine 1 angeordnet. Er ist zwischen einem Vorsatzgerät 6 und der Erntemaschine 1 angeordnet. Das Vorsatzgerät 6 ist zum Aufnehmen von Erntegut 8 vorgesehen. Um das Erntegut 8 bodennah abschneiden zu können, ist der Schrägförderer 2 um eine Schwenkachse (nicht gezeigt) schwenkbar an der Erntemaschine angeordnet, so dass das Vorsatzgerät 6 höhenverstellbar ist. Mit dem Schrägförderer 2 wird das Erntegut 8 zu dessen Verarbeitung in die Erntemaschine 1 gefördert. Das Erntegut 8 wird hier in einem Dreschwerk 7 der Erntemaschine verarbeitet.

Der Schrägförderer 2 weist zwei oder mehr Antriebsrollen 4 und Umlenkrollen 3 auf. Im Rahmen der Fig. 1 - 3 wird die Erfindung aber anhand von einer Antriebsrolle 4 und einer Umlenkrolle 3 beschrieben.

Die Umlenkrolle 3 ist an einem Einführende 201 des Schrägförderers 2 angeordnet. Am Einführende 201 ist das Vorsatzgerät 6 am Schrägförderer 2 befestigt. Das vom Vorsatzgerät 6 aufgenommene Erntegut 8 wird daher am Einführende 201 in den Schrägförderer 2 eingeführt.

Die Antriebsrolle 4 ist an einem dem Einführende 201 gegenüber liegenden Ausführende 202 des Schrägförderers 2 angeordnet, an dem das Erntegut 8 den Schrägförderer 2 verlässt. Es fließt dann in die Erntemaschine 1, hier in das Dreschwerk 7, ein.

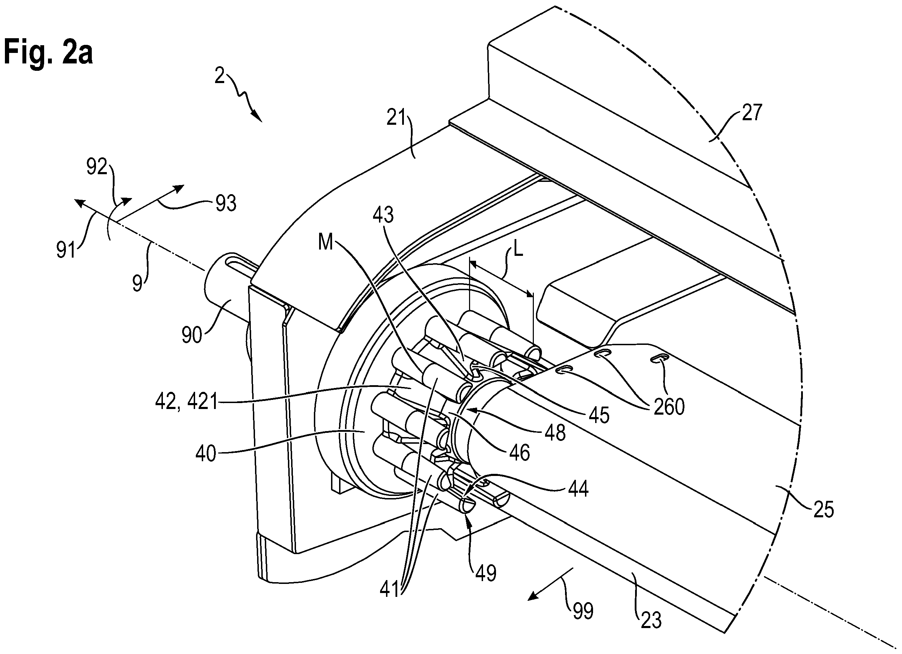

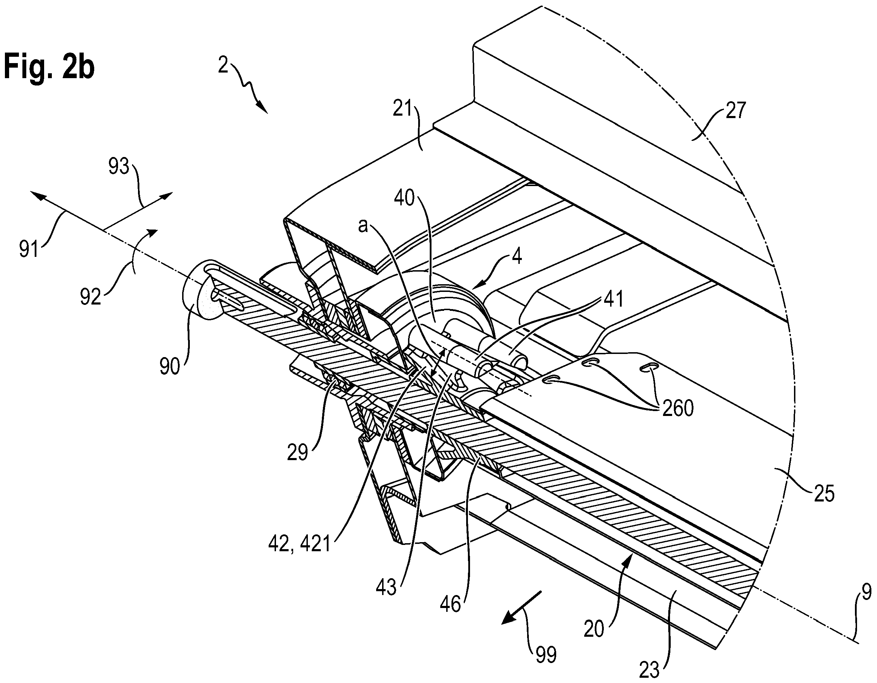

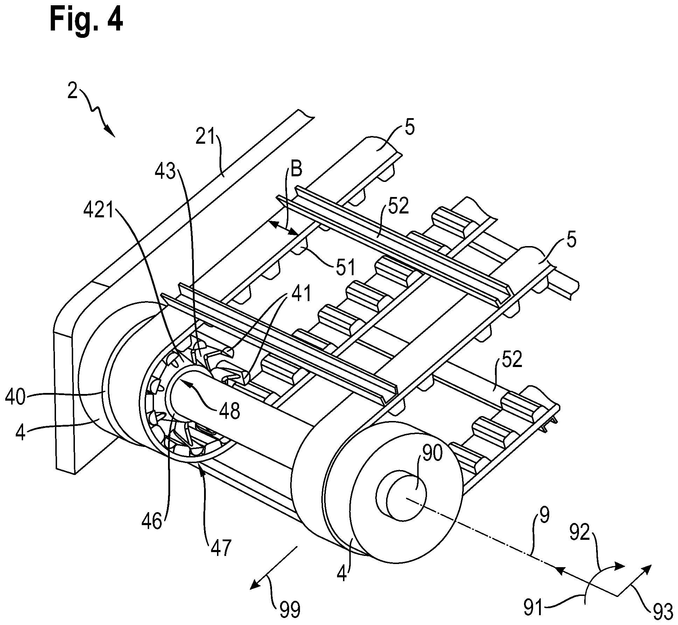

Die Antriebsrolle 4 ist drehfest an einer Antriebswelle 90 gelagert. Ebenso ist die Umlenkrolle 3 drehfest an einer Umlenkwelle 30 gelagert. Sowohl die Antriebswelle 90 als auch die Umlenkwelle 30 sind drehbar in einem Gehäuse 22, hier in einander gegenüber liegenden Gehäuseseitenwänden 21 (s. Fig. 2-4), gelagert. Die Gehäuseseitenwände 21 sind durch eine Gehäuseunterwand 23 (s. Fig. 2(b)) und eine Gehäuseoberwand 27 (s. Fig. 2-3) miteinander verbunden. Gemeinsam begrenzen die Gehäuseseitenwände 21, die Gehäuseunterwand 23 sowie die Gehäuseoberwand 27 einen insbesondere etwa quaderförmig ausgebildeten Innenraum 28 des Schrägförderers 2. Zum Fördern des Erntegutes 8 ist zumindest ein endloses Förderband 5 (s. Fig. 4) vorgesehen, dass die Antriebsrolle (4) und die Umlenkrolle (3) umschlingt.

Im Schrägförderer 2 wird das Erntegut 8 unterschächtig gefördert. Das heißt, dass es entlang der Unterwand 23 gefördert wird. Dafür wird die Antriebsrolle 4 in eine Drehrichtung 92 um die Antriebsachse 9 angetrieben. Eine Förderrichtung 99 des Erntegutes 8 ist hier durch zwei Pfeile 99 schematisch gezeigt.

Fig. 2 zeigt in (a) einen Ausschnitt aus einem Schrägförderer 2 mit einer erfindungsgemäßen Antriebsrolle 4 und in (b) ein Schnittbild aus (a). Die Antriebsrolle 4 ist an der Antriebswelle 90, die sich in eine axiale Richtung 91 einer Antriebsachse 9 erstreckt, angeordnet. Die Antriebswelle 90 ist in der Gehäuseseitenwand 21 drehbar gelagert. Beispielhaft ist dafür ein in der Gehäuseseitenwand 21 angeordnetes Kugellager 29 gezeigt. Die Antriebswelle 90 durchsetzt das Kugellager 29.

Zum Schutz der Antriebswelle 90 weist das Gehäuse 22 eine Innenabdeckung 25 auf, die diese zumindest teilweise umgreift. Durch die Innenabdeckung 25 wird vermieden, dass das Erntegut 8 die Antriebswelle 90 umschlingt.

Die Antriebsrolle 4 ist einer der Gehäuseseitenwände 21 des Gehäuses 22 benachbart angeordnet. Sie weist eine sich quer zur Antriebsachse 9 erstreckende Seitenwand 40 auf. Weiterhin ist sie mittels einer sich konzentrisch um die Antriebsachse 9 erstreckenden Nabe 46 drehfest an der Antriebswelle 90 befestigt. Die Seitenwand 40 ist hier an der Nabe 46, beispielsweise mittels Schrauben (nicht gezeigt), festgelegt. Dadurch dreht sie sich beim Drehen der Antriebswelle 90 mit dieser in oder gegen die Drehrichtung 92.

An der Nabe 46 sind Mitnehmer 41 gleichmäßig verteilt angeordnet. Die Mitnehmer 41 erstrecken sich von der Seitenwand 40 ausgehend zu einem offenen Ende 47 hin. Sie sind zum form- und/oder kraftschlüssigen Transport eines Förderbandes 5 vorgesehen. Die Seitenwand 40 bildet einen Anschlag für das Förderband 5, der ein Verschieben des Förderbandes 5 in oder gegen die axiale Richtung 91 begrenzt.

Um ein Herausfördern von Erntegut- und/oder Bödenbestandteilen (nicht gezeigt) aus der Antriebsrolle 4 zu unterstützen, ist eine den Mitnehmern 41 zugewandte Außenfläche 42 der Nabe 46 zumindest teilweise rampenförmig ausgebildet. Dadurch verjüngt sich die Nabe 42 von der Seitenwand 40 ausgehend in Richtung zum offenen Ende 47 hin. Ein Abstand a (s. Fig. 2(b)) der Mitnehmer 41 zur Außenfläche 42 vergrößert sich daher in dieser Richtung.

Der rampenförmig ausgebildete Teil der Außenfläche 42, im Folgenden als Rampe 421 bezeichnet, dient als Führungsmittel zum Abtransport der Erntegut- und/oder Bodenbestandteile, durch das diese, insbesondere durch nachrückende Erntegut- und/oder Bodenbestandteile, im Betrieb des Schrägförderers 2 zum offenen Ende 47 hin gedrückt werden. Sie setzen die Mitnehmer 41 dann nicht zu und behindern den form- und/oder kraftschlüssigen Transport des Förderbandes 5 nicht.

Um Kräfte, die an den Mitnehmern 41 jeweils in radialer Richtung 93 und/oder Drehrichtung 92 angreifen, abzustützen, ist für jeden Mitnehmer 41 jeweils ein Stützsteg 43 vorgesehen. Die Stützstege 43 erstrecken sich jeweils in radialer Richtung 93 zur Antriebsachse 9. Zudem erstrecken sie sich jeweils flächig in axialer Richtung 91, so dass sie eine Zwischenwand bilden, die zwischen der Außenfläche 42, hier der Rampe 421, und ihrem Mitnehmer 41 angeordnet ist. An einer dem offenen Ende 47 zugewandten Seite weist der Stützsteg 43 außerdem eine Bogenform 45 auf.

An einer der Nabe 46 zugewandten Unterseite 44 (s. Fig. 2 (a)) verjüngen sich die Mitnehmer 41 jeweils zum offenen Ende 47 hin, so dass ein Freiraum 48 zwischen den Mitnehmern 41 und der Außenfläche 42 am offenen Ende 47 groß ist. Die zwischen die Mitnehmer 41 geratenen Erntegut- und Bodenbestandteile können dann leicht dorthin nachrücken.

An einer der Außenfläche 42 abgewandten Oberseite 49 (s. Fig. 2(a)) weisen die Mitnehmer 41 jeweils außerdem eine zu ihrer Mitte M hin ansteigende Kontur (nicht bezeichnet) auf, durch die das an den Mitnehmern 41 angeordnete Förderband 5 geringfügig verspannt, und so besser gehalten wird.

Die Oberseite 49 ist in einem Querschnitt quer zur axialen Richtung 91 außerdem bogenförmig oder halbkreisförmig ausgebildet. Dadurch können Anformungen 51, die am Förderband 5 angeordnet und zu seinem form- und/oder kraftschlüssigen Transport vorgesehen sind, leicht zwischen die Mitnehmer 41 gleiten.

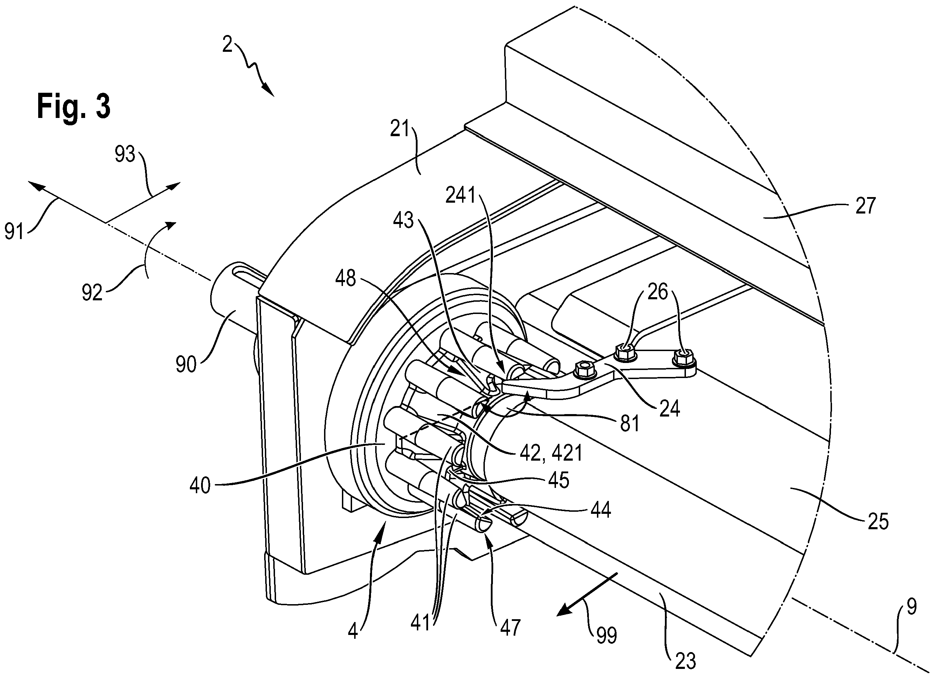

Fig. 3 zeigt einen Ausschnitt aus einer weiteren Ausführungsform eines Schrägförderers 2 mit der erfindungsgemäßen Antriebsrolle 4. Der Schrägförderer 2 unterscheidet sich von dem der Fig. 2 durch einen Ausräumzahn 24, der an der Innenabdeckung 25 ortsfest befestigt ist. Dafür sind hier Schrauben 26 vorgesehen, die in Durchgangsbohrungen 260 der Innenabdeckung 25 eingeschraubt sind.

Der Ausräumzahn 24 ragt mit einem spitz zulaufenden Ausräumende 241 in den Freiraum 48 zwischen den Mitnehmern 41 und der Außenfläche 42 hinein. Dadurch erfasst er im Freiraum 48 angeordnete Erntegut- und/oder Bodenbestandteile. Damit diese sich nicht an ihm verfangen und festsetzen, ist das Ausräumende 241 zur Förderrichtung 99 des Erntegutes 8 in einem stumpfen Ausräumwinkel 81 (s. Fig. 3) angeordnet.

Fig. 4 zeigt eine weitere Ausführungsform eines Schrägförderers 2 mit zwei erfindungsgemäßen Antriebsrollen 4 und zwei endlosen Förderbändern 5. Die Förderbänder 5 umschlingen jeweils eine der Antriebsrollen 4 und eine der Umlenkrollen 3 (s. Fig. 1). Sie sind im Innenraum 28 des Schrägförderers 1 voneinander beabstandet und jeweils einer Gehäuseseitenwand 21 benachbart angeordnet. Die Förderbänder 5 weisen eine Breite B auf, die etwa einer Länge L (s. Fig. 2 (a)) der Mitnehmer 41 entspricht.

An den Förderbändern 5 sind Anformungen 51 angeordnet. An der Antriebsrolle 4 greifen die Anformungen 51 form- und/oder kraftschlüssig zwischen die Mitnehmer 41. Beim Antrieb der Antriebsrolle 4, insbesondere im Betrieb des Schrägförderers 2, werden die Förderbänder 5 daher form- und/oder kraftschlüssig angetrieben.

Um das Erntegut 8 zu transportieren, sind an den Förderbändern 5, insbesondere in äquidistanten Abständen, Förderleisten 52 angeordnet. Die Förderleisten 52 erstrecken sich quer zur Förderrichtung 99 und verbinden die beiden Förderbänder 5 mechanisch miteinander. Erntegut 8, das in einem Förderspalt 20 (s. Fig. 1) zwischen der Unterwand 23 des Schrägförderers 2 und den Förderleisten 52 angeordnet ist, wird im Betrieb des Schrägförderers 2, in dem die Antriebsrollen 4 angetrieben sind, mit den Förderleisten 52 mitgenommen und dadurch in Förderrichtung 99 gefördert.

Durch die zumindest teilweise rampenförmige Ausbildung der Außenfläche 42 der Nabe 46 kann Erntegut 8, dass dabei an der Seitenwand 40 zwischen die Mitnehmer 41 gerät, insbesondere durch nachrückende Erntegut- und/oder Bodenbestandteile, aus der Antriebsrolle 4 herausgefördert werden. Am offenen Ende 47 gelangen sie dann wieder in den Innenraum 28 des Schrägförderers 2 und zurück in den Erntegutstrom.

Es sind auch Schrägförderer 2 mit mehr als zwei Förderbändern 5 bevorzugt. Auch bei solchen Schrägförderern 2 sind die Förderbänder 5 mittels der Förderleisten 52 miteinander verbunden. Auch diese Schrägförderer 2 weisen für jedes der Förderbänder 5 jeweils eine Antriebsrolle 4 und eine Umlenkrolle 3 auf. Die den Gehäuseseitenwänden 21 des Schrägförderers 2 benachbarten Antriebsrollen 4 weisen dabei bevorzugt eine Seitenwand 40 als Anschlag für ihr Förderband 5 auf. Die Seitenwand 40 kann bei den mittigen Antriebsrollen 4 entfallen.

### Bezugszeichenliste

- 1: Selbstfahrende Erntemaschine, Mähdrescher
- 2: Schrägförderer
- 20: Förderspalt
- 201: Einführende
- 202: Ausführende
- 21: Gehäuseseitenwand
- 22: Gehäuse
- 23: Gehäuseunterwand
- 24: Ausräumzahn
- 241: Ausräumende
- 81: Stumpfer Ausräumwinkel
- 25: Innenabdeckung
- 260: Durchgangsbohrung
- 26: Schraube
- 27: Gehäuseoberwand
- 28: Innenraum
- 29: Kugellager
- 3: Umlenkrad
- 30: Umlenkwelle
- 4: Antriebsrad
- 40: Seitenwand
- 41: Mitnehmer
- 42: Außenfläche
- 421: Rampe
- 43: Stützsteg
- 44: Unterseite
- 45: Bogenform
- 46: Nabe
- 47: Offenes Ende
- 48: Freiraum
- 49: Oberseite
- 5: Förderband
- 51: Anformung
- 52: Förderleiste
- 6: Vorsatzgerät
- 7: Dreschwerk
- 8: Erntegut
- 9: Antriebsachse
- 90: Antriebswelle
- 91: Axiale Richtung
- 92: Drehrichtung
- 93: Radiale Richtung
- 99: Förderrichtung
- M: Mitte
- a: Abstand
- L: Länge
- B: Breite

## Patentansprüche

1. Antriebsrolle (4) für einen Schrägförderer (2) zum Fördern von Erntegut (8) in eine selbstfahrende Erntemaschine (1), wobei die Antriebsrolle (4) mittels einer sich konzentrisch um eine Antriebsachse (9) erstreckenden Nabe (46) drehfest an einer Antriebswelle (90) befestigbar ist, wobei die Antriebsrolle (4) Mitnehmer (41) aufweist, die gleichmäßig verteilt an der Nabe (46) angeordnet sind, die sich von der Nabe (46) ausgehend zu einem offenen Ende (47) hin erstrecken, und zum form- und/oder kraftschlüssigen Transport eines Förderbandes (5) vorgesehen sind, wobei eine den Mitnehmern (41) zugewandte Außenfläche (42) der Nabe (46) zumindest teilweise rampenförmig ausgebildet ist, so dass sich die Nabe (46) in oder gegen eine axiale Richtung (91) der Achse (9) zum offenen Ende (47) hin verjüngt,
**dadurch gekennzeichnet, dass**
sich die Mitnehmer (41) jeweils an einer der Außenfläche (42) zugewandten Unterseite (44) in Richtung zum offenen Ende (47) hin verjüngen.

2. Antriebsrolle (4) nach Anspruch 1, **dadurch gekennzeichnet, dass** zwischen der Außenfläche (42) und jedem der Mitnehmer (41) ein sich in einer radialen Richtung (93) zur Antriebsachse (9) erstreckender Stützsteg (43) angeordnet ist.

3. Antriebsrolle (4) nach Anspruch 2, **dadurch gekennzeichnet, dass** sich der Stützsteg (43) in einer axialen Richtung (91) der Antriebsachse (90) flächig erstreckt.

4. Antriebsrolle (4) nach einem der Ansprüche 2 oder 3, **dadurch gekennzeichnet, dass** der Stützsteg (43) an seiner dem offenen Ende (47) zugewandten Seite eine Bogenform (45) aufweist.

5. Antriebsrolle (4) nach einem der vorherigen Ansprüche, **dadurch gekennzeichnet, dass** sie eine sich quer zur Antriebsachse (9) erstreckende Seitenwand (40) aufweist.

6. Antriebsrolle (4) nach einem der vorherigen Ansprüche, **dadurch gekennzeichnet, dass** sich die Mitnehmer (41) parallel zur Antriebsachse (9) erstrecken.

7. Antriebsrolle (4) nach einem der vorherigen Ansprüche, **dadurch gekennzeichnet, dass** die Mitnehmer (41) an einer der Außenfläche (42) abgewandten Oberseite (49) jeweils eine zu ihrer Mitte (M) hin ansteigende Kontur aufweisen.

8. Antriebsrolle (4) nach Anspruch 7, **dadurch gekennzeichnet, dass** die Oberseite (49) in einem Querschnitt quer zur axialen Richtung (91) eine bogenförmige oder halbkreisförmige Kontur aufweist.

9. Schrägförderer (2) für eine Erntemaschine (1), insbesondere einen Mähdrescher, der zum Fördern von Erntegut (8) in die Erntemaschine (1), insbesondere in ein Dreschwerk (7) des Mähdreschers (1), vorgesehen und lösbar an der Erntemaschine (1) anordbar ist, wobei der Schrägförderer (2) mindestens ein endloses Förderband (5) umfasst, das eine Antriebsrolle (4) nach einem der vorherigen Ansprüche sowie eine Umlenkrolle (3) umschlingt.

10. Schrägförderer (2) nach Anspruch 9, **dadurch gekennzeichnet, dass** er zwei oder mehr Förderbänder (5) aufweist, die jeweils eine Antriebsrolle (4) und eine Umlenkrolle (3) umschlingen.

11. Schrägförderer (2) nach einem der Ansprüche 9 - 10, **dadurch gekennzeichnet, dass** er, insbesondere für jede Antriebsrolle, einen Ausräumzahn (24) aufweist, der an einem Gehäusebauteil, insbesondere an einer Innenabdeckung (25), ortsfest angeordnet ist, und der in einen Freiraum (48) zwischen den Mitnehmern (41) und der Außenfläche (42) hineinragt.

12. Anordnung aus einer selbstfahrenden Erntemaschine (1) und einem an dieser angeordneten Schrägförderer (2) nach einem der Ansprüche 9 - 11.

## Claims

1. A drive roller (4) for an inclined conveyor (2) for conveying crop material (8) into a self-propelled harvester (1), wherein the drive roller (4) can be non-rotatably fixed to a drive shaft (90) by means of a hub (46) extending concentrically about a drive axis (9), wherein the drive roller (4) has entrainment members (41) which are arranged distributed uniformly on the hub (46) and which extend from the hub (46) towards an open end (47) and are provided for positively locking and/or force locking transport of a conveyor belt (5), wherein an outside surface (42) of the hub (46), that is towards the entrainment members (41), is at least partly of a ramp-shaped configuration so that the hub (46) tapers in or in opposite relationship to an axial direction (91) of the axis (9) towards the open end (47),
**characterised in that** the entrainment members (41) respectively taper at an underside (44) towards the outside surface (41) in a direction towards the open end (47).

2. A drive roller (4) according to claim 1 **characterised in that** arranged between the outside surface (42) and each of the entrainment members (41) is a support limb (43) extending in a radial direction (93) of the drive axis (9).

3. A drive roller (4) according to claim 2 **characterised in that** the support limb (48) extends flat in an axial direction (91) of the drive axis (90).

4. A drive roller (4) according to one of claims 2 and 3 **characterised in that** the support limb (43) is of an arcuate shape (45) at its side towards the open end (47).

5. A drive roller (4) according to one of the preceding claims **characterised in that** it has a side wall (40) extending transversely relative to the drive axis (9).

6. A drive roller (4) according to one of the preceding claims **characterised in that** the entrainment members (41) extend parallel to the drive axis (9).

7. A drive roller (4) according to one of the preceding claims **characterised in that** at a top side (49) facing away from the outside surface (42) the entrainment members (41) each have a contour rising towards the centre (M).

8. A drive roller (4) according to claim 7 **characterised in that** the top side (49) in a cross-section transversely relative to the axial direction (91) is of an arcuate or semicircular contour.

9. An inclined conveyor (2) for a harvester (1), in particular a combine harvester, which is provided for conveying crop material (8) into the harvester (1), in particular into a threshing mechanism (7) of the combine harvester (1), and can be arranged releasably on the harvester (1), wherein the inclined conveyor (2) includes at least one endless conveyor belt (5) which passes around a drive roller (4) according to one of the preceding claims and a direction-changing roller (3).

10. An inclined conveyor (2) according to claim 9 **characterised in that** it has two or more conveyor belts (5) which respectively pass around a drive roller (4) and a direction-changing roller (3).

11. An inclined conveyor (2) according to one of claims 9 and 10 **characterised in that**, in particular for each drive roller, it has a clearing-out tooth (24) which is arranged stationarily on a housing component, in particular on an internal cover (25), and which projects into a free space (48) between the entrainment members (41) and the outside surface (42).

12. An arrangement comprising a self-propelled harvester (1) and an inclined conveyor (2) according to one of claims 9 to 11 arranged thereon.

## Revendications

1. Rouleau d'entraînement (4) pour un convoyeur incliné (2) prévu pour convoyer du produit récolté (8) dans une machine de récolte automotrice (1), le rouleau d'entraînement (4) pouvant être solidarisé en rotation à un arbre d'entraînement (90) au moyen d'un moyeu (46) s'étendant concentriquement autour d'un axe d'entraînement (9), le rouleau d'entraînement (4) comportant des moyens entraîneurs (41) qui sont disposé sur le moyeu (46) en étant répartis uniformément, et qui s'étendent à partir du moyeu (46) vers son extrémité ouverte (47) et qui sont prévus pour le transport par complémentarité de formes et/ou de forces d'une bande de convoyage (5), une surface extérieure (42) du moyeu (46) tournée vers les moyens entraîneurs (41) étant conçue au moins en partie en forme de rampe, de sorte que le moyeu (46) se rétrécit dans ou vers une direction axiale (91) de l'axe (9) vers l'extrémité ouverte (47), **caractérisé en ce que** les moyens entraîneurs (41) se rétrécissent chacun vers l'extrémité ouverte (47) au niveau d'une sous-face (44) tournée vers la surface extérieure (42).

2. Rouleau d'entraînement (4) selon la revendication 1, **caractérisé en ce qu'**entre la surface extérieure (42) et chacun des moyens entraîneurs (41) est disposée une patte d'appui (43) s'étendant dans la direction radiale (93) par rapport à l'axe d'entraînement (9).

3. Rouleau d'entraînement (4) selon la revendication 2, **caractérisé en ce que** la patte d'appui (43) s'étend à plat dans une direction axiale (91) de l'axe d'entraînement (90).

4. Rouleau d'entraînement (4) selon une des revendications 2 ou 3, **caractérisé en ce que**, sur son côté tourné vers l'extrémité ouverte (47), la patte d'appui (43) présente une forme arquée (45) .

5. Rouleau d'entraînement (4) selon une des revendications précédentes, **caractérisé en ce qu'**une paroi latérale (40) s'étend transversalement à l'axe d'entraînement (9).

6. Rouleau d'entraînement (4) selon une des revendications précédentes, **caractérisé en ce que** les moyens entraîneurs (41) s'étendent parallèlement à l'axe d'entraînement (9).

7. Rouleau d'entraînement (4) selon une des revendications précédentes, **caractérisé en ce que** les moyens entraîneurs (41) présentent chacun, sur un dessus (49) situé à l'opposé de la surface extérieure (42), un contour ascendant vers leur centre (M).

8. Rouleau d'entraînement (4) selon la revendication 7, **caractérisé en ce que** le dessus (49) présente, en coupe transversale à la direction axiale (91), un contour arqué ou semi-circulaire.

9. Convoyeur incliné (2) pour une machine de récolte (1), en particulier pour une moissonneuse-batteuse, lequel est prévu pour convoyer du produit récolté (8) dans la machine de récolte (1), en particulier dans un système de battage (7) de la moissonneuse-batteuse (1) et peut être disposé amovible sur la machine de récolte (1), le convoyeur incliné (2) comprenant au moins une bande de convoyage sans fin (5) qui passe autour d'un rouleau d'entraînement (4) selon une des revendications précédentes ainsi qu'autour d'un rouleau de renvoi (3).

10. Convoyeur incliné (2) selon la revendication 9, **caractérisé en ce qu'**il comporte deux ou plusieurs bandes de convoyage (5) qui passent chacune autour d'un rouleau d'entraînement (4) et d'un rouleau de renvoi (3).

11. Convoyeur incliné (2) selon une des revendications 9 et 10, **caractérisé en ce qu'**il comporte, en particulier pour chaque rouleau d'entraînement, une dent de débourrage (24) qui est disposée de manière fixe sur un élément de carter, en particulier sur un capot intérieur (25), et qui pénètre dans un espace libre (48) entre les moyens entraîneurs (41) et la surface extérieure (42).

12. Agencement constitué d'une machine de récolte automotrice (1) et, disposé sur celle-ci, d'un convoyeur incliné (2) selon une des revendications 9 à 11.
